# EUROPEAN PATENT APPLICATION

(11) **EP 2 731 346 A2**
(43) Date of publication of application: **14.05.2014**
(21) Application number: 14153860.3
(22) Date of filing: 15.12.2011
(51) Int. Cl.: H04N 21/454, H04N 21/4545, H04N 21/475, H04N 21/4627, H04N 21/845

(54) **Micro-filtering of streaming entertainment content based on parental control setting**

(30) Priority: 16.12.2010 US 970618
(62) Divisional of application: 11804876.8
(71) Applicant: Cisco Technology, Inc., San Jose, CA 95134-1706 (US)
(72) Inventor: Ahrens, Douglas L., Norcross, GA Georgia 30092 (US); Chave, Peter, Lawrenceville, GA Georgia 30043 (US); Desai, Jatin, Norcross, GA Georgia 30092 (US)
(74) Representative: Warren, Caroline Elisabeth

(57) **Abstract**

Enhanced parental control may be provided. In various embodiments, content advisory information may be inserted directly into a program, wherein the content advisory information comprises rating information for a plurality of scenes, wherein each scene comprises less than the entire program and wherein at least two scenes have different rating information. A content stream containing the program is then transmitted to one or more consumer devices. In one embodiment, reversible corruption is introduced into the header or data field of a plurality of packetized elementary stream packets containing content targeted for filtering.

## Description

This application is being filed on 15 December 2011, as a PCT International Patent application in the name of Cisco Technology, Inc., a U.S. national corporation, applicant for the designation of all countries except the US, and Douglas L. Ahrens, a citizen of the U.S., Peter Chave, a citizen of the United Kingdom, and Jatin Desai, a citizen of the U.S., applicants for the designation of the US only, and claims priority to U.S. Utility Application Serial Number 12/970,618 filed December 16, 2010, the subject matter of which is incorporated by reference in its entirety.

### TECHNICAL-FIELD

The present disclosure relates generally to parental control methods for streaming entertainment content.

### BACKGROUND

Present parental control methods for streaming video and or audio entertainment content (streaming content), such as V-Chip, may be too encompassing and may only provide choices which exclude entire versions of provided content or provide the entire content without exclusion. For the benefit of better parental control of streaming content, however, it may be preferable that content filtering be done on a more granular scale to provide a more flexible and useful end-user experience.

### BRIEF DESCRIPTION OF THE DRAWINGS

Many aspects of the disclosure can be better understood with reference to the following drawings. The components in the drawings are not necessarily to scale. Emphasis is instead placed upon clearly illustrating the principles of the present disclosure. Moreover, in the drawings, like references numerals designate corresponding parts through the several figures.
FIG. 1 is a block diagram illustrating an example environment in which certain embodiments of enhanced parental control may be implemented.
FIG. 2 is a flow chart of a method for providing certain embodiments of enhanced parental control.
FIG. 3 is a flow chart of a method for providing certain embodiments of enhanced parental control.
FIG. 4 is a flow chart of a method for providing certain embodiments of enhanced parental control.
FIG. 5 is a flow chart of a method for providing certain embodiments of enhanced parental control.
FIG. 6 is a flow chart of a method for providing certain embodiments of enhanced parental control.
FIG. 7 is a block diagram of a system including a network device.

### DETAILED DESCRIPTION OF EXAMPLE EMBODIMENTS

In various embodiments, a method may be provided comprising inserting content advisory information directly into a video and/or audio entertainment program, or streaming event, wherein the content advisory information comprises rating information for a plurality of scenes, wherein each scene comprises less than the entire event and wherein at least two portions or two components of the same portion have different rating information. The method may further comprise transmitting the marked content stream containing the event to one or more consumer devices.

Consistent with embodiments of providing enhanced parental control, a method may be provided comprising: receiving a plurality of elementary streams. The elementary streams may be decoded to extract video, audio, and/or event control information, including dynamic content advisory information. The content advisory information may be compared to user-determined parental control settings. A portion less than the entirety of an event contained in the elementary streams may be filtered based on the comparison.

Consistent with embodiments of providing enhanced parental control, a system may be provided comprising: a receiving node device in communication with a streaming content source for receiving a content stream, wherein the receiving node device comprises: a decoder for decoding the content stream to extract video, audio, and/or event control information, including dynamic content advisory information; a storage mechanism for holding default or consumer defined parental control settings for use by a decoder; a comparator for comparing the dynamic content advisory information with a decoder's user-defined parental control settings; and a filtering module for filtering a portion less than the entirety of an event contained in the elementary streams.

Current parental control filters capable of filtering digital content for television viewing or viewing through other means are a desirable feature for end-users, but implementations often found within existing standards, such as the Advanced Television Systems Committee ("ATSC"), Digital Video Broadcasting ("DVB"), Integrated Services Digital Broadcasting ("ISDB"), Digital Multimedia Broadcast ("DMB"), and other digital streaming content standards are insufficient to meet the needs of today's end-users. These, and other, standards use digital content formatted as defined by the Moving Picture Experts Group ("MPEG") standards (i.e., MPEG-2, MPEG-4, H.264, MP3, etc.), Society of Motion Picture and Television Engineers ("SMPTE"), and others. Instead, according to embodiments of the present invention, enhanced parental control may be provided which allows for a more responsive implementation of parental control employing micro-filters to filter unwanted content as it occurs, as opposed to filtering out the entire requested event. This implementation is applicable to audio-only events as well.

Embodiments of the present invention may serve to replace V-chip in end-user devices. V-chip may block entire events based on a single instance within the event that is identified to be over the parental control threshold configured by a consumer into a decoder. Such a blocking by V-chip may result in a period of thirty minutes or longer where nothing but a blank screen is viewable to the end-user requesting a restricted television event. Typically, V-chip provides very limited options for filtering. For example, V-chip may provide an end-user with the options of 1) blocking the entire event; 2) viewing the event, wherein the viewing will include the objectionable content; or 3) requesting a different content source or a different event. This provides very limiting options to a family where consumers of all ages wish to enjoy entertainment content together.

Furthermore, advertisers do not care for the operation of V-chip, as it may prevent end-users from receiving advertisements associated with a blocked event. Resultantly, advertisers may become hesitant to pay for advertising slots in events that are susceptible to being blocked by V-chip. Furthermore, the consumers may be likely to request a different source of content other than the source provided events which are blocked by V-chip.

One unsatisfactory solution to these problems presented by V-chip is for content providers to provide events that are unrated. In this way, V-chip does not identify streams as having or not having objectionable content. As a result, when objectionable content appears in the event, V-chip has no indication that the rating of event content has changed. A need exists to receive embedded parental control information in the content streams such that a compliant decoder can detect a content rating change in real-time and block only selected portions of a presented event.

In ATSC, parental control information may be provided through a Program and System Information Protocol ("ATSC A/65: PSIP") through the use of a Content Advisory Descriptor ("CAD") within an Event Information Table ("EIT"). The EIT may be associated with an event using an Event Identifier ("EID"). The EID may be unique in the transport path, but it should be recognized that the EID may be modified and/or duplicated by a number of devices as more content is aggregated. The CAD may remain static in comparison to the dynamic nature of streaming data and may reference all content within the event (as opposed to the individual components of the content). Thus, there may be only an indirect association between PSIP data and the MPEG content it represents.

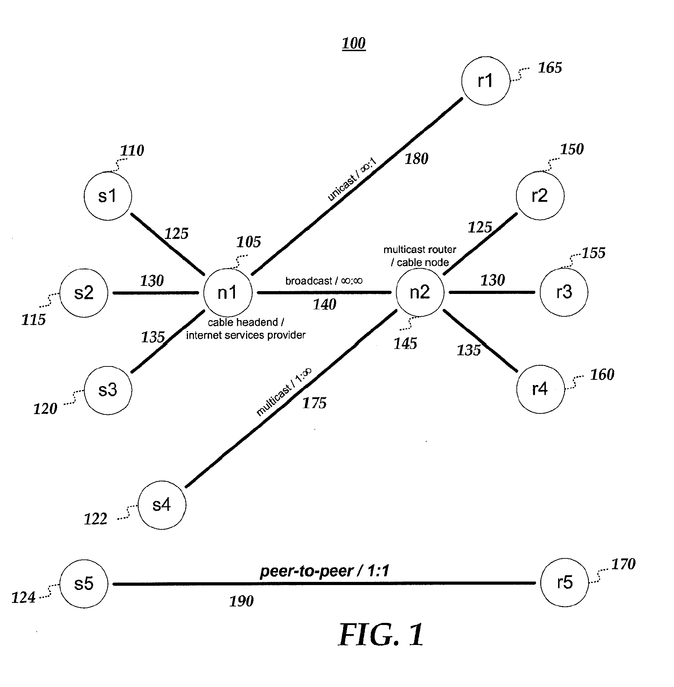

Figure 1 is a block diagram illustrating a network environment 100 in which certain embodiments of enhanced parent control may be implemented. Network environment 100 may comprise, for example, a subscriber television network, though other networks are contemplated to be within the scope of this disclosure. Network environment 100 may include a plurality of individual networks, such as a wireless network and/or a wired network, including wide-area networks ("WANs"), local area networks ("LANs"), among others.

Network environment 100 may comprise a first network node 105. First network node 105 may be, for example, a headend that: receives and/or generates video content, audio content, and/or other content (e.g., data) sourced at least in part from one or more broadcasters, service providers, and/or content transmitting nodes 110, 115, and 120; processes and/or stores content transmission stream 125, 130, and 135; and delivers the content over a transmission stream 140 to a second network node 145.

First network node 105 and transmitting nodes 110, 115, and 120 may also comprise other components, such as QAM modulators, routers, bridges, Internet Service Provider ("ISP") facility servers, private servers, on-demand servers, multimedia messaging servers, content schedule servers, gateways, multiplexers, and/or transmitters, among other equipment, components, and/or computing and communication devices. Communication of data, video, or audio packets between transmitting nodes 110, 115, and 120 and the first network node 105 may be implemented according to one or more of a plurality of different protocols, such as user datagram protocol ("UDP") and a transmission control protocol ("TCP")/internet protocol ("IP"), MPEG program and transport streams, or other multimedia data wrappers.

Accordingly, transmission stream 140 may be comprised of some combination of video stream 130, audio stream 135 and data stream 125. Data stream 125 may originate from data transmitting node 110 while video and audio streams 130 and 135 may originate from transmitting nodes 115 and 120, respectively. Though network environment 100 is illustrated to comprise only one data transmission node, in various embodiments, network environment 100 may comprise multiple data transmitting nodes as well as multiple video transmitting nodes.

Transmitting nodes 110, 115, and 120 may provide the video, audio, and data streams 125, 130, and 135 to first network node 105 which may propagate the video, audio, and data streams 125, 130, and 135, via transmission stream 140, to second network node 145. Second network node 145 may then route data stream 125 to data receiving node 150 and video and audio streams 130 and 135 to their respective video receiving nodes 155 and 160.

In various embodiments, receiving nodes 150, 155, and 160 may comprise digital decoders (i.e., cable TV set-top boxes, personal computers, mobile cellular phones, digital audio ("MP3") players, digital satellite receivers, etc., coupled to, or integrated with, a presentation device (e.g., television, computer monitor, audio speakers, etc.) or other communication devices and further coupled to transmission medium 140 (e.g., hybrid-fiber coaxial ("HFC") medium, coaxial, optical, twisted pair, radio transmitter, satellite, etc.) via a wired connection (e.g., via coax from a tap) or wireless connection (e.g., satellite, wireless wide area network ("WWAN"), wireless local area network ("WLAN"), etc.).

Further embodiments of network environment 100 may include a unicast transmission 180, where a single data receiving node 165 may be in communication with first network node 105. Other embodiments of network environment 100 may include a multicast transmission 175 transmitting from a transmitting node 122 to second network node 145. In other embodiments of network environment 100 a peer to peer relationship 190 may exist between a single transmitting node 124 and a single data receiving node 170.

Embodiments of the present invention for enhanced parental control may be implemented in hardware, software, firmware, or a combination thereof (collectively or individually also referred to herein as logic). To the extent certain embodiments, or portions thereof, are implemented in software or firmware, executable instructions or code for performing one or more tasks of enhanced parental control are stored in memory or any other suitable computer readable medium and executed by a suitable instruction execution system. In the context of this document, a computer readable medium is an electronic, magnetic, optical, or other physical device or means that can contain or store a computer program for use by or in connection with a computer related system or method.

To the extent embodiments, or portions thereof, are implemented in hardware, enhanced parental control may be implemented with any or a combination of the following technologies: a discrete logic circuit(s) having logic gates for implementing logic functions upon data signals, an application specific integrated circuit ("ASIC") having appropriate combinational logic gates, programmable hardware such as a programmable gate array(s) (PGA), a field programmable gate array ("FPGA"), etc.

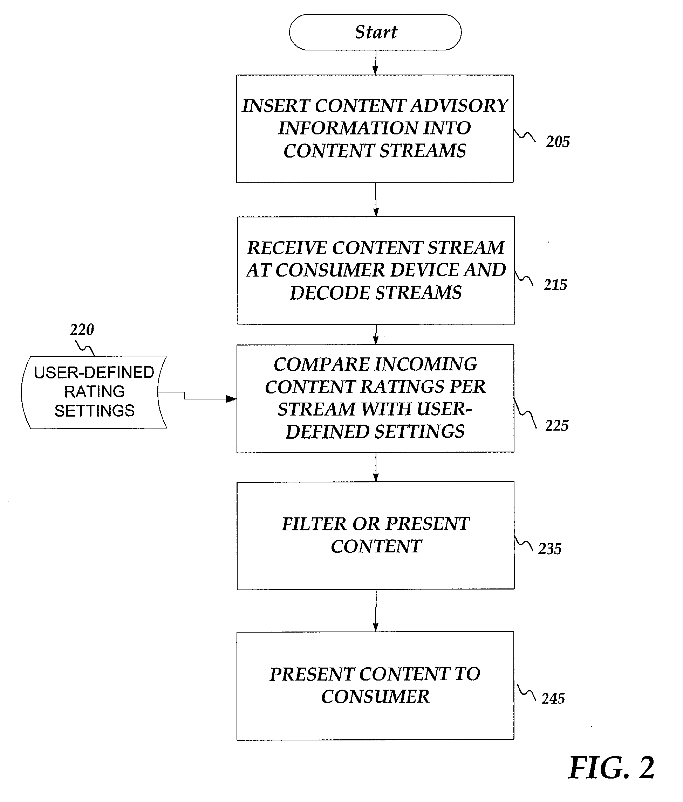

Figure 2 illustrates a flow chart showing the operation of embodiments of the present invention. The method may begin at step 205. At 205, content advisory information may be inserted directly in the content streams. The method may proceed to step 215, where a consumer device, such as a set-top box receives the content streams. The set-top box may include a decoder and filtering module for decoding the received content. After receipt of the streamed content, the method may proceed to step 225.

At step 225, user-defined rating settings 220 may be accessed. The user-defined rating settings 220 may then be compared with the content ratings contained in the received content streams.

At step 235, the filtering module may filter a scene or part of a scene identified as targeted content. Targeted content may be content that exceeds a rating value set into the decoder by the consumer. This avoids the necessity of filtering the entire event as is done with V-chip. If an offered media event may be micro-filtered, the content that does not exceed the user-defined rating value may still be presented to the consumer. Typically, this may represent the majority of content within a requested streaming event.

The parental control information may be associated directly to the content that it represents. The parental control information may be updated in real-time or on scheduled time intervals. For example, if the parental control information is provided in real-time concurrently with the requested event, the method may advance to step 245 where display changes may be effected immediately when the content rating changes. In some embodiments of the present invention, content providers may embed dynamic content advisory information into the individual elementary streams. For example, dynamic content advisory information may be provided separately in both a packetized video stream and a packetized audio stream associated with an event. Each of the individual streams may be received by an end-user. The decoder associated with the requesting end-user may compare individual packets in each stream to the user settings stored in the decoder. This allows for all streams in the content to be individually filtered during a real-time presentation of the requested event.

In embodiments of the present invention, the filtering action could last for varying periods of time. For example, if an unwanted swear word is filtered from an audio stream, the filtering action may last for less than a second. Alternatively, scenes of extended periods of time may also be blocked, if necessary. For example, an entire scene containing unwanted content may be filtered. Once the rating of the streaming content returns to a rating level equal to or less than the user-defined rating, the filtering action is finished and operation of the decoder may return to normal.

One method of providing content filtering according to embodiments of the present invention a descriptor may be inserted directly into the header of the packetized elementary stream. For example, a content filtering descriptor could be located in the PES_Private_Data field of the MPEG Packetized Elementary Stream ("PES") header extension. One advantage to this location of the content filtering descriptor is that the PES_Private_Data field of the packetized elementary stream survives most head-end processing, such as modulation/demodulation, multiplexing, transrating, transcoding, and splicing. It should be understood that embodiments of this invention may also implement the use of a private data stream to ensure the passage of the content filtering data. This method could also be used with other encapsulated data protocols.

Content ratings may be organized based on the current rating definitions employed in the industry to define entire events. However, in embodiments of the present invention the ratings may be applied to individual scenes and scene segments. The content filtering descriptor may consist of an identifying function code to distinguish it from other application. The content filtering descriptor may further consist of a rating value. The rating values may represent the MPA ratings, U.S. TV Parental Guidelines, Canadian Language Ratings, or any other suitable ratings system. In some embodiments, the content filtering descriptor may include individual rating dimensions, such as the CAD rating value as defined by ATSC PSIP, which may provide for a more granular rating system that would provide additional flexibility and expanded functionality.

It should be understood that ATSC EIT CAD descriptors and the PSIP Rating Region Table ("RRT") would remain to support legacy devices and provide the event's overall rating in the electronic program guide. Exceeding the rating value, or set value in some number of user-selectable dimensions, would cause a filtering action. When using such dimensions, default settings may be established to correlate with existing rating systems. Additionally, the decoder may allow the end-user to select a default treatment for unrated content.

To keep overhead to a minimum and permit separate filtering of audio and video, the content filtering descriptor in each individual stream may only carry content advisory information relevant only to its own content. The video content filtering descriptors may contain only rating information for the tagged MPEG Group of Pictures ("GOP") or an individual video frame. The audio content filtering descriptors may contain only rating information for the individual MPEG Audio Access Unit ("AAU").

The video stream may carry a video content filtering descriptor only within the packetized elementary stream packet header of each I-frame when addressing whole GOPs. This data would only be necessary in B-frame and P-frame packets when addressing individual frames. Each audio stream will carry a content filtering descriptor within each AAU. In some embodiments, a short descriptor could support a simple function code and rating codes. These codes may correspond with the ratings system employed. Similarly, in some embodiments, a longer descriptor could support a more complex function code and rating codes. In some embodiments, a larger field could support the use of CAD rating dimensions individually for video (i.e., sexual situations, realistic violence, fantasy violence, cultural sensitivity, etc.) and audio (i.e., adult language, suggestive dialog, cultural sensitivity, etc.) components of the content.

Filtering content rated according to embodiments of this invention may be effected through an opt-in scenario or an opt-out scenario. Implementation of an opt-in scenario may involve receiving content, which is unmodified, except for the addition of the content filtering descriptor. A compliant decoder may detect and act on the content filtering descriptor. Alternatively, a legacy decoder may ignore the content filtering descriptor and play the content normally.

Embodiments of the present invention may operate according to an opt-out scenario. In this scenario, the content may be modified, in addition to the content filtering descriptor. In this manner, targeted content may be filtered for all but compliant decoders. The content stream may employ one of a number of options to block targeted content on legacy decoders and either block or display the targeted content on compliant decoders.

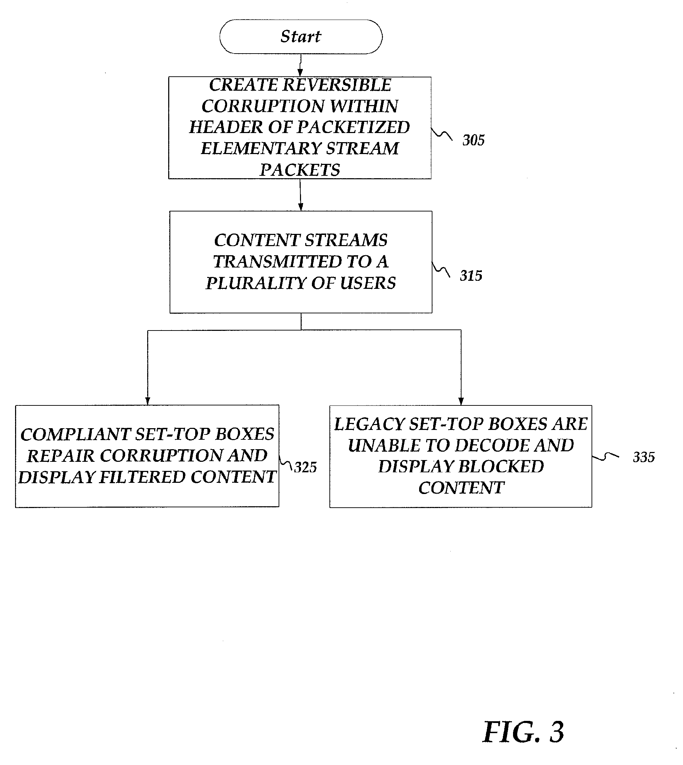

Figure 3 illustrates one method to implement the opt-out scenario. At step 305, a predictable and reversible corruption may be created within the header of packetized elementary stream packets which contain content targeted for filtering. At step 315, the content streams are transmitted to a plurality of end-users. The end-users may receive the content through a decoder. The decoder may comprise a device such as a cable TV set-top box.

At step 325, compliant decoders may read the content filtering descriptor and subsequently repair the corruption and display the filtered content, as allowed based on end-user settings. Alternatively, at step 335, legacy decoders may be unable to decode or display the blocked content in the received streams.

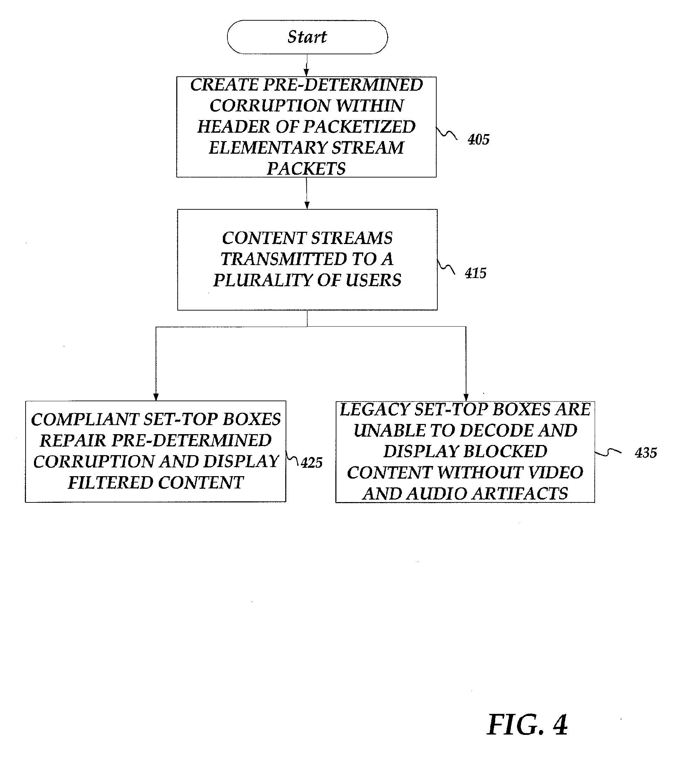

Figure 4 illustrates an alternative method of implementing the opt-out scenario in embodiments of the present invention. At step 405, pre-determined corruption may be created within the data of the packetized elementary stream packets. At step 415, the content streams are transmitted to a plurality of end-users. The end-users may receive the content through a decoder. The decoder may comprise a set-top box. At step 425, the compliant decoders may repair the corruption and display the filtered content, as allowed based on end-user settings. Alternatively, at step 435, legacy decoders may be unable to decode or display the blocked content without causing video and/or audio artifacts.

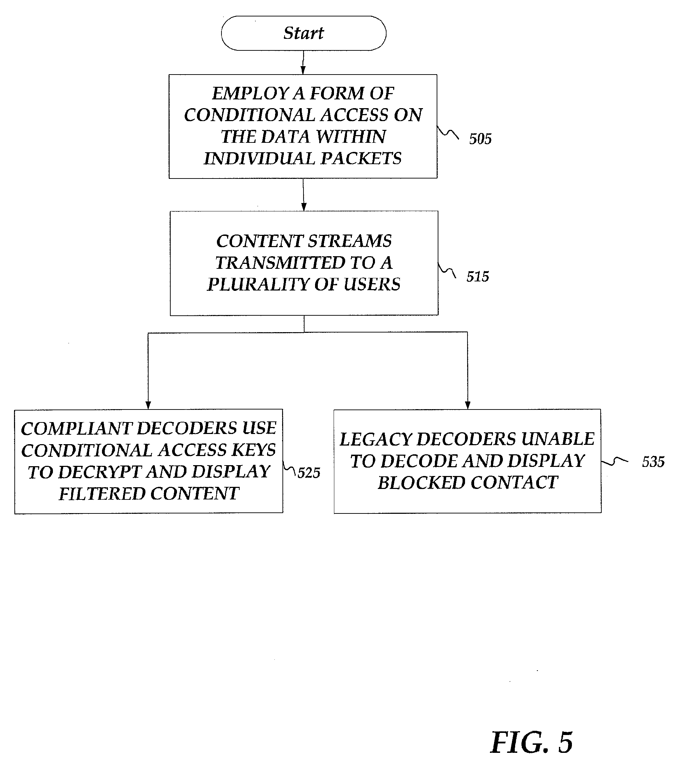

Figure 5 illustrates another contemplated method of implementing the opt-out scenario in embodiments of the present invention. At step 505, a content provider may employ a simple form of conditional access on the data within individual packets. At step 515, the content streams are transmitted to a plurality of end-users. The end-users may receive the content through a decoder. The decoder may comprise a device such as a cable TV set-top box. At step 525, the compliant decoders may use one or more conditional access keys to decrypt and play the filtered content, as allowed based on end-user settings. Alternatively, at step 535, legacy decoders may be unable to decode, or properly display the blocked content. A standard key may be used to implement the conditional access wherein the key may be included in a MPEG Private Data Table. The MPEG Private Data Table may be embedded in the content stream, or embedded in the firmware of the decoder.

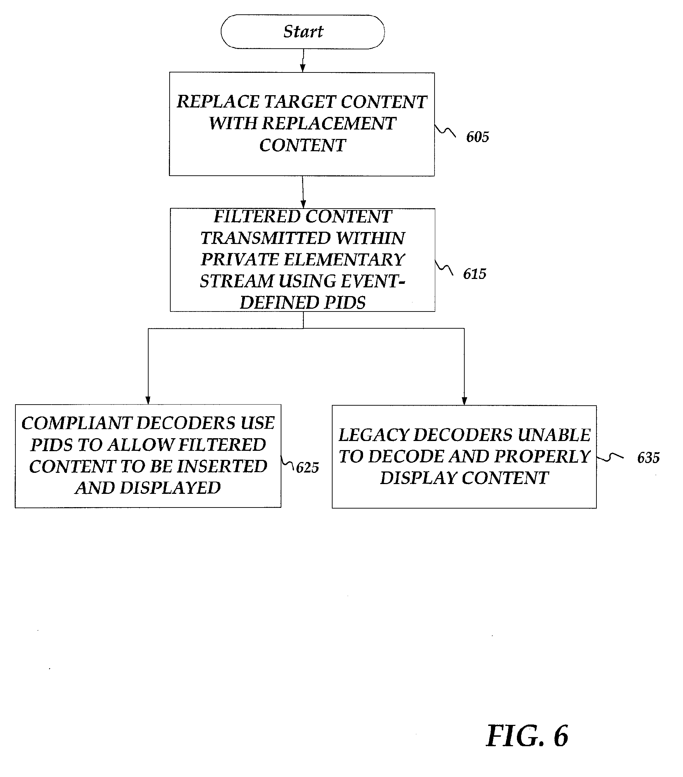

Figure 6 illustrates another method of implementing the opt-out scenario in embodiments of the present invention. At step 605, the targeted content may be replaced with one of a black screen, an on-screen message, or MPEG NULL packets. Next, at step 615 the filtered content may be transmitted within private elementary streams, using event-defined packet identifiers. At step 625, the event-defined packet identifier may allow the filtered content to be inserted and displayed by compliant decoders, as allowed based on end-user settings. Alternatively, at step 635, legacy decoders may be unable to decode or properly display the content from the private streams.

Such secondary private streams may be presented permanently or intermittently. If the secondary private stream is permanent, it may transport NULL packets, to preserve bandwidth, except for when filtered content is available. If the secondary private stream is presented intermittently, the secondary packets would only be transmitted when filtered content is available. The secondary private streams may employ MPEG Presentation Time Stamps to ensure the accurate presentation of filtered content. It should be understood that combinations of the above methods of implementing the opt-out scenario are considered herein. It should also be understood that a mixture of opt-in and opt-out content may be provided in embodiments of the present invention.

When filtering content, it is important to manage the consumer viewing experience. In embodiments of the present invention, a single frame of unfiltered black screen or an on-screen filtering message may be inserted into the content stream at instances where the video ratings level changes. A single frame of unfiltered black screen or an on-screen filtering message may be displayed periodically during an event such that the screen will not have a frozen or macro-blocked picture should a filtering action take place. In the case of GOP-level filtering, the filtering action may begin with a MPEG video I-frame and may continue throughout the GOP.

To filter the audio, a MPEG AAU of quiet audio or a notification tone may be inserted into the content stream immediately before audio rating changes. The AAU may also be added periodically during presentation, such that the end-user will not have annoying audio output, like crackling, popping, or presentation of audio artifacts during an audio filtering event. In some embodiments, an on-screen message or watermark symbol could also be displayed during an audio filtering action. The described inserted video and audio should be presented only momentarily and should not have an adverse impact on the event's unfiltered presentation.

It should be understood that embodiments of the present invention may be implemented in any number of contexts, including streaming media in various formats including broadcast (cable, off-air, satellite), recorded (DVDs, CDs, digital audio formats), over the Internet, etc. Adhering to their respective standards, embodiments of the present invention may be implemented in other broadcast formats including Digital Video Broadcasting ("DVB"), Integrated Services Digital Broadcasting ("ISDB"), Digital Multimedia Broadcast ("DMB"), and other digital streaming standards. Likewise, in some embodiments of the present invention, there is no limitation to continuing the broadcast of existing content advisory information.

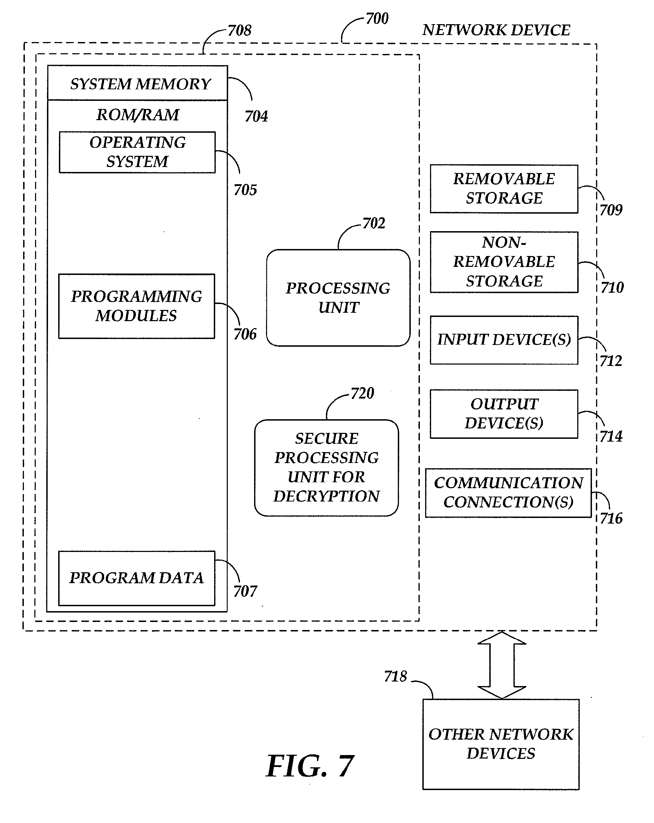

The methods described in Figs. 2-6 may be implemented using a network device 700 as described in more detail below with respect to Figure 7. The network device may comprise, for example, but is not limited to, any transmitting or receiving network node device depicted in Figure 1.

Figure 7 is a block diagram of a system including network device 700. Consistent with embodiments of enhanced parental control, the aforementioned memory storage and processing unit may be implemented in a network device, such as network device 700 of FIG. 7. Any suitable combination of hardware, software, or firmware may be used to implement the memory storage and processing unit. For example, the memory storage and processing unit may be implemented with network device 700 or any of other network devices 718, in combination with network device 700. The aforementioned system, device, and processors are examples and other systems, devices, and processors may comprise the aforementioned memory storage and processing unit, consistent with embodiments of enhanced parental control. Furthermore, network device 700 may comprise an operating environment for system 100 as described above. System 100 may operate in other environments and is not limited to network device 700.

With reference to FIG. 7, a system consistent with embodiments of the present invention of enhanced parental control may include a network device, such as network device 700. In a basic configuration, network device 700 may include at least one processing unit 702, a secure processing unit for decryption 720, and a system memory 704. Depending on the configuration and type of network device, system memory 704 may comprise, but is not limited to, volatile (e.g., random access memory ("RAM")), non-volatile (e.g., read-only memory ("ROM")), flash memory, or any combination. System memory 704 may include operating system 705, one or more programming modules 706, and may include program data 707. Operating system 705, for example, may be suitable for controlling network device 700's operation. Furthermore, embodiments of enhanced parental control may be practiced in conjunction with a graphics library, other operating systems, or any other application program and is not limited to any particular application or system. This basic configuration is illustrated in FIG. 7 by those components within a dashed line 708.

Network device 700 may have additional features or functionality. For example, network device 700 may also include additional data storage devices (removable and/or non-removable) such as, for example, magnetic disks, optical disks, or tape. Such additional storage is illustrated in FIG. 7 by a removable storage 709 and a non-removable storage 710. Computer storage media may include volatile and nonvolatile, removable and non-removable media implemented in any method or technology for storage of information, such as computer readable instructions, data structures, program modules, or other data. System memory 704, removable storage 709, and non-removable storage 710 are all computer storage media examples (i.e., memory storage.) Computer storage media may include, but is not limited to, RAM, ROM, electrically erasable read-only memory ("EEPROM"), flash memory or other memory technology, CD-ROM, digital versatile disks ("DVD") or other optical storage, magnetic cassettes, magnetic tape, magnetic disk storage or other magnetic storage devices, or any other medium which can be used to store information and which can be accessed by network device 700. Any such computer storage media may be part of device 700. Network device 700 may also have input device(s) 712 such as a keyboard, a mouse, a pen, a sound input device, a touch input device, etc. Output device(s) 714 such as a display, speakers, a printer, etc. may also be included. The aforementioned devices are examples and others may be used.

Network device 700 may also contain a communication connection 716 that may allow device 700 to communicate with other network devices 718, such as over a network in a distributed network environment, for example, an intranet or the Internet. Communication connection 716 is one example of communication media. Communication media may typically be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include electrical or optical wired media such as a wired network or direct-wired connection, and wireless media such as acoustic, radio frequency ("RF"), infrared, and other wireless media. The term computer readable media as used herein may include both storage media and communication media.

As stated above, a number of program modules and data files may be stored in system memory 704, including operating system 705. While executing on processing unit 702 or secure processing unit for decryption 720, programming modules 706 may perform processes including, for example, one or more method 500's stages as described above. The aforementioned process is an example; processing unit 702 and secure processing unit for decryption 720 may perform other processes.

Generally, consistent with enhanced parent control according to embodiments of this invention, program modules may include routines, programs, components, data structures, and other types of structures that may perform particular tasks or that may implement particular abstract data types. Moreover, embodiments may be practiced with other computer system configurations, including hand-held devices, multiprocessor systems, microprocessor-based or programmable consumer electronics, minicomputers, mainframe computers, and the like. Embodiments of enhanced parental control may also be practiced in distributed network environments where tasks are performed by remote processing devices that are linked through a communications network. In a distributed network environment, program modules may be located in both local and remote memory storage devices.

Furthermore, embodiments of enhanced parental control may be practiced in an electrical circuit comprising discrete electronic elements, packaged or integrated electronic chips containing logic gates, a circuit utilizing a microprocessor, or on a single chip containing electronic elements or microprocessors. Embodiments may also be practiced using other technologies capable of performing logical operations such as, for example, AND, OR, and NOT, including but not limited to mechanical, optical, fluidic, and quantum technologies. In addition, embodiments of the invention may be practiced within a general purpose computer or in any other circuits or systems.

Embodiments of enhanced parental control, for example, may be implemented as a computer process (method), a network system, or as an article of manufacture, such as a computer program product or computer readable media. The computer program product may be a computer storage media readable by a computer system and encoding a computer program of instructions for executing a computer process. The computer program product may also be a propagated signal on a carrier readable by a network system and encoding a computer program of instructions for executing a computer process. Accordingly, aspects of enhanced parental control may be embodied in hardware and/or in software (including firmware, resident software, microcode, etc.). In other words, embodiments of enhanced parental control may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random access memory ("RAM"), a read-only memory ("ROM"), an erasable programmable read-only memory ("EPROM" or Flash memory), an optical fiber, and a portable compact disc read-only memory ("CD-ROM"). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

Embodiments of enhanced parental control, for example, are described above with reference to block diagrams and/or operational illustrations of methods, systems, and computer program products according to embodiments of enhanced parental control. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

While certain embodiments of enhanced parental control have been described, other embodiments may exist. Furthermore, although embodiments have been described as being associated with data stored in memory and other storage mediums, data can also be stored on or read from other types of computer-readable media, such as secondary storage devices, like hard disks, floppy disks, or a CD-ROM, a carrier wave over a coax cable, digital data from the Internet, or other forms of RAM or ROM. Further, the disclosed methods' stages may be modified in any manner, including by reordering stages and/or inserting or deleting stages, without departing from the invention.

While the specification includes examples, the invention's scope is indicated by the following claims. Furthermore, while the specification has been described in language specific to structural features and/or methodological acts, the claims are not limited to the features or acts described above. Rather, the specific features and acts described above are disclosed as example for embodiments of enhanced parental control.

Embodiments of the system are further set out in the following numbered clauses:
1. A method comprising:
   inserting content advisory information directly into a program, wherein the content advisory information comprises rating information for a plurality of scenes, wherein each scene comprises less than the entire program and wherein at least two scenes have different rating information;
   transmitting a content stream containing the program to one or more consumer devices.
2. The method of Clause 1, further comprising:
   embedding the content advisory information into at least one of an elementary video stream and an elementary audio stream associated with the program.
3. The method of Clause 2, further comprising:
   embedding the content advisory information into the header of at least one of an elementary video stream and an elementary audio stream associated with the program.
4. The method of Clause 1, further comprising transmitting the content advisory information over a private data stream.
5. The method of Clause 1, wherein the rating information is based on an industry standard enforced in the geographical area of the consumer devices.
6. The method of Clause 1, wherein the content advisory information further comprises a plurality of individual rating dimensions.
7. The method of Clause 1, further comprising the step of introducing reversible corruption into the header or data field of a plurality of packetized elementary stream packets containing content targeted for filtering.
8. A method comprising:
   receiving a plurality of elementary streams;
   decoding the elementary streams to extract content advisory information;
   comparing content advisory information to user-determined parental control settings; and
   filtering a portion less than the entirety of a program contained in the elementary streams.
9. The method of Clause 8, wherein the step of decoding further comprises reversing corruption in a plurality of packet headers to extract the content advisory information.
10. The method of Clause 8, wherein the step of filtering further comprises filtering either or both an audio elementary stream and a video elementary stream.
11. The method of Clause 10, wherein the step of filtering further comprises replacing at least one audio access unit with replacement content.
12. The method of Clause 10, wherein the step of filtering further comprises replacing at least one individual video frame with replacement content.
13. The method of Clause 8, wherein the step of decoding further comprises using one or more conditional access keys to restrict access to the content based on the content advisory information.
14. The method of clause 12, wherein the replacement content comprises one of: a black screen, an on-screen message, or NULL packets.
15. A system comprising:
   a receiving node device in communication with a headend for receiving a content stream, wherein the receiving node device comprises:
      a decoder for decoding the content stream to extract dynamic content advisory information;
      a comparator for comparing the content advisory information with predetermined parental control settings; and
      a filtering module for filtering a portion less than the entirety of a program contained in the elementary streams.
16. The system of Clause 15, wherein the dynamic content advisory information comprises a function code and a rating code.
17. The system of Clause 16, wherein the function code supports dynamic rating dimensions for both video and audio.
18. The system of Clause 15, wherein the decoder is configured to repair expected corruption in a plurality of packet headers to extract the dynamic content advisory information.
19. The system of Clause 15, wherein the decoder is configured to locate event-defined private packet identifier to identify targeted content for filtering.
20. The system of Clause 15, wherein the content advisory information is received in one or more secondary private streams.

## Claims

1. A method comprising:
inserting content advisory information directly into a program, wherein the content advisory information comprises rating information for a plurality of scenes, wherein each scene comprises less than the entire program and wherein at least two scenes have different rating information;
transmitting a content stream containing the program to one or more consumer devices.

2. The method of Claim 1, further comprising the step of introducing reversible corruption into the header or data field of a plurality of packetized elementary stream packets containing content targeted for filtering.

3. The method of Claim 1, further comprising transmitting the content advisory information over a private data stream.

4. The method of Claim 1, wherein the rating information is based on an industry standard enforced in the geographical area of the consumer devices and/or wherein the content advisory information further comprises a plurality of individual rating dimensions.

5. The method of Claim 1, further comprising:
embedding the content advisory information into at least one of an elementary video stream and an elementary audio stream associated with the program, preferably into the header of at least one of an elementary video stream and an elementary audio stream associated with the program.

6. A method comprising:
receiving a plurality of elementary streams;
decoding the elementary streams to extract content advisory information;
comparing content advisory information to user-determined parental control settings; and
filtering a portion less than the entirety of a program contained in the elementary streams.

7. The method of Claim 6, wherein the step of decoding further comprises reversing corruption in a plurality of packet headers to extract the content advisory information.

8. The method of Claim 6, wherein the step of decoding further comprises using one or more conditional access keys to restrict access to the content based on the content advisory information.

9. The method of Claim 6, wherein the step of filtering further comprises filtering either or both an audio elementary stream and a video elementary stream.

10. The method of Claim 9, wherein the step of filtering further comprises replacing at least one audio access unit with replacement content or replacing at least one individual video frame with replacement content, optionally wherein the replacement content comprises one of: a black screen, an on-screen message, or NULL packets.

11. A system comprising:
a receiving node device in communication with a headend for receiving a content stream, wherein the receiving node device comprises:
a decoder for decoding the content stream to extract dynamic content advisory information;
a comparator for comparing the content advisory information with predetermined parental control settings; and
a filtering module for filtering a portion less than the entirety of a program contained in the elementary streams.

12. The system of Claim 11, wherein the decoder is configured to repair expected corruption in a plurality of packet headers to extract the dynamic content advisory information.

13. The system of Claim 11, wherein the dynamic content advisory information comprises a function code and a rating code, optionally wherein the function code supports dynamic rating dimensions for both video and audio.

14. The system of Claim 11, wherein the decoder is configured to locate event-defined private packet identifier to identify targeted content for filtering.

15. The system of Claim 11, wherein the content advisory information is received in one or more secondary private streams.
